Europäisches Patentamt

European Patent Office

Office européen des brevets

(11) Publication number: **0 314 093**
**A2**

# (12) EUROPEAN PATENT APPLICATION

(21) Application number: **88117824.8**

(22) Date of filing: **26.10.88**

(51) Int. Cl.⁴: **G06F 3/06**

The title of the invention has been amended (Guidelines for Examination in the EPO, A-III, 7.3).

(30) Priority: **27.10.87 US 113880**

(43) Date of publication of application:
**03.05.89 Bulletin 89/18**

(84) Designated Contracting States:
**AT BE CH DE ES FR GB GR IT LI LU NL SE**

(71) Applicant: **CORE INTERNATIONAL INC.**
**7171 North Federal Highway**
**Boca Raton Florida 33431(US)**

(72) Inventor: **Prewitt, Hal**
**771 N.E. 33rd Street**
**Boca Raton, Florida 33487(US)**

(74) Representative: **Schickedanz, Willi, Dipl.-Ing.**
**Langener Strasse 68**
**D-6050 Offenbach/Main(DE)**

(54) **Disc interface circuit.**

(57) A method and apparatus for enhancing personal computers and the like, of the kind having an internal hard disk drive connected directly to a disk controller rather than to a data input/output bus, by operationally interposing a disk interface circuit between the disk controller and the internal hard disk drive. The interface circuit includes means for routing input/output data and control signals to and from the internal hard disk drive as well as for routing input/output data and control signals to and from at least one auxiliary hard disk drive. The internal hard disk drive may be thereby supplemented or replaced.

EP 0 314 093 A2

## Computer Enhancement

### Background of the Invention

#### 1. Field of the Invention

This invention relates generally to the field of personal computers, and in particular, to the enhancement of such computers by supplemental and/or replacement hard disk drives.

#### 2. Prior Art

Personal computers are generally designed with a main input/output data bus, by means of which any number of basic operating circuits and functions are connected to the computer. Such connections are often referred to as expansion slots. Some expansion slots are required for basic functions, such as monitor control, printer control, serial or parallel data ports, and the like. The circuits are provided on printed circuit boards or cards which literally plug into connector sockets on the main bus. Expansion slots are also utilized to provide modems, additional disk drive controls, graphics displays, addition random access memory (RAM) and the like.

Computers are usually identified by compatibility groups, which actually refers to the various operating systems which have been adopted by the leading computer manufacturers. Computer peripherals, expansion cards and the like are therefore identified as, for example, IBM compatible or APPLE compatible (IBM and APPLE are registered trademarks of International Business Machines Corp. and Apple Computers Corp. respectively). Accordingly, computer peripherals and expansion cards are more marketable if they are usable across an entire group of computers. This is frustrating to the leading manufacturers, as many small companies market expansion cards with special features and/or at lower prices than the leading manufacturers are able to provide.

Attempts are sometimes made to design a computer system which, by its physical and/or operational characteristics, cannot be easily expanded or "cloned" (copied and sold at a lower price) by others. One such recent attempt restricts the ability to replace or supplement an internal hard disk drive. The restriction is accomplished by designing the plug/connector of the internal hard disk drive to require direct attachment to the disk controller, rather than enabling attachment to any expansion slot of a data bus. Such a design, exemplified by the IBM PS/2 Model 50 Computer (trademark of International Business Machines, Corp.), intended that it be physically impossible to replace the internal hard disk drive, because of the direct connection. Moreover, there is no circuit connector provided by which an external or auxiliary hard disk drive can even be connected.

This invention provides a method and apparatus by which the internal hard disk drive of such a computer may be replaced and/or supplemented by auxiliary hard disk drives, with relative ease.

### Summary of the Invention

It is an object of the invention to enhance personal computers.

It is another object of the invention to enhance personal computers by replacing internal hard disk drives.

It is still another object of the invention to enhance personal computers by supplementing internal hard disk drives.

It is yet another object of the invention to enhance personal computers by replacing and/or supplementing an internal hard disk drive which has been so designed and installed as to frustrate such enhancement.

These and other objects of the invention are accomplished by operationally interposing a disk interface circuit between the disk controller of the computer and the internal hard disk drive. The disk interface circuit provides at least two data input/output paths. The first path maintains data communication and control between the disk controller of the computer and the internal hard disk drive. The second path establishes data communication and control between the disk controller of the computer and an auxiliary or supplemental external hard disk drive.

In a presently preferred embodiment, the disk interface circuit is provided on a printed circuit board or card. The printed circuit is plugged into the disk controller of the computer, instead of the internal hard disk drive. The original internal hard disk drive, or a replacement internal hard disk drive may then be mounted on the printed circuit board and plugged into the printed circuit board. A cable for connecting at least one external hard disk drive may also be plugged into the printed circuit board. The printed circuit board, mounting brackets thereon and the internal hard disk drive mounted on the brackets are sufficiently slim in profile as to occupy little more than the space originally occupied by the internal hard disk drive alone.

Insofar as the invention may be applied to enhancing the IBM PS/2 Model 50 Computer, the enhancement may be accomplished by use of simple tools and without any need for special training or experience.

Brief Description of the Drawings

The invention is illustrated in the following drawings, it being understood that the invention is not limited to the precise arrangements and instrumentalities shown.

Fig. 1 is a block diagram of the invention, including a disk interface circuit;

Fig. 2 is a logic diagram schematic of the disk interface circuit of Fig. 1;

Fig. 3 is a top plan view of a disk interface board; and,

Fig. 4 is a bottom plan view of the disk interface board.

Detailed Description of the Preferred Embodiments

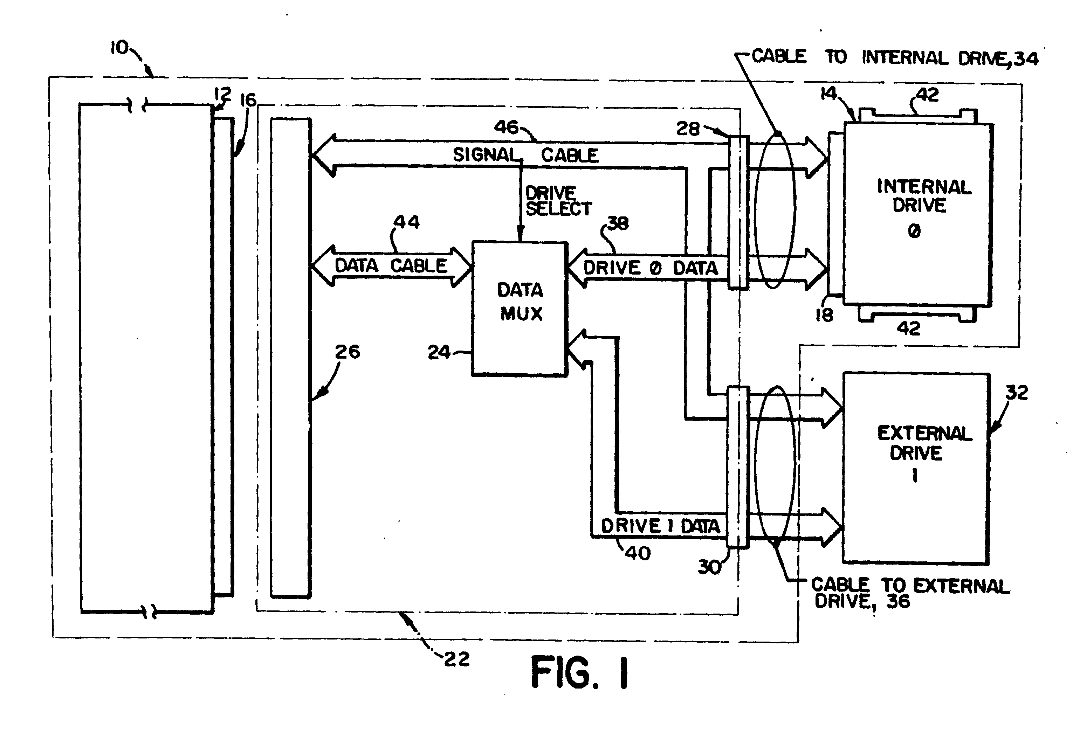

The invention is illustrated in conjunction with enhancement of an IBM PS/2 Model 50 Computer, generally designated 10. The computer 10 is shown by a dotted-line block. The functional components of computer 10 pertinent to this invention are disk controller 12 and internal hard disk drive 14. Although not shown in detail in Fig. 1, disk controller 12 is provided with a socket 16 and disk drive 14 is provided with a corresponding plug 18, by means of which the two components are ordinarily connected directly to one other, for exchange of control signals and data. Internal hard disk drive 14 is mounted on a bracket assembly (not shown). The connections and bracket assembly are so arranged as to be physically and operatively independent of the data bus and associated expansion slot assemblies, neither of which need be shown in the drawings.

As shown in Fig. 1, the disk interface circuit board 22, shown by a dash-dot block, embodies a data multiplexer 24 and three connector plug assemblies 26, 28 and 30. Connector plug assembly 26 provides for interconnection of the disk controller 12 and the disk interface circuit. Connector plug assembly 28 provides for interconnection of the disk interface circuit and the internal disk drive 14. Connector plug assembly 30 provides for interconnection of the disk interface circuit and an external or auxiliary hard disk drive 32. It will be appreciated that plug assembly 20 can be used for interconnection with a substitute internal hard disk drive (not shown).

The interconnection between plug assembly 26 and socket 16 is direct. The interconnection between plug assembly 28 and plug 18 is preferably made by cable 34. The interconnection between plug assembly 30 and external drive 32 is preferably made by cable 36.

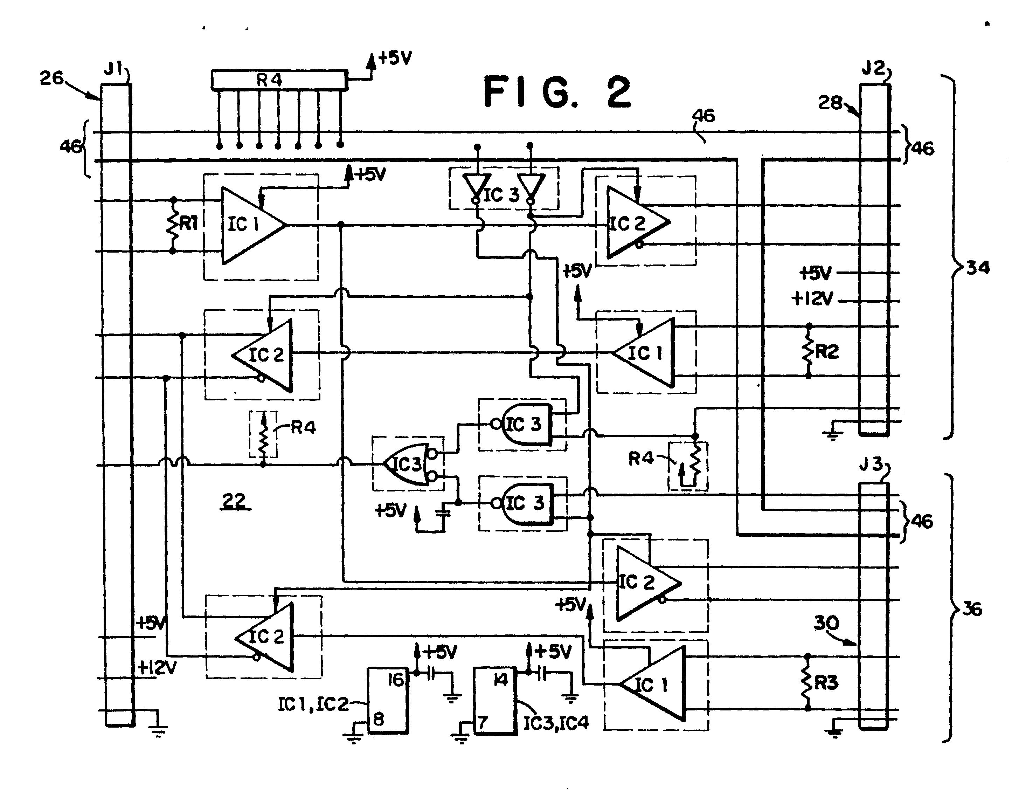

A logic diagram schematic the disk interface circuit is shown in Fig. 2. The disk interface circuit on board 22 multiplexes the data signals to connect the internal and external (auxiliary) hard disk drives to the same disk controller 12, using the Drive Select Lines 38 (Drive "0" Data) and 40 (Drive "1" Data) respectively. The multiplexer routes data and control signals between a first port, defined by plug assembly 26, connected to the disk controller 12 and at least two branch ports, defined by plug assemblies 28 and 30, adapted for connection to disk drives. The Raw Index signal from each of the drives is also gated on Drive Select. The Data Cable 44 and Signal Cable 46 are formed on the printed circuit board 22.

Integrated circuit IC1 is part no. 3486; integrated circuit IC2 is part no. 3487; and, integrated circuits IC3 and IC4 are part no. 74LS00. Resistors R1, R2 and R3 are 100 ohm, $\frac{1}{4}$watt resistors. R4 is a resistor pack of 2.2K ohm resistors. Capacitors C1, C2, C3 and C4 are .01uF. The use of integrated circuit IC4 enables certain custom applications depending upon the nature of the supplemental hard disk drive being installed.

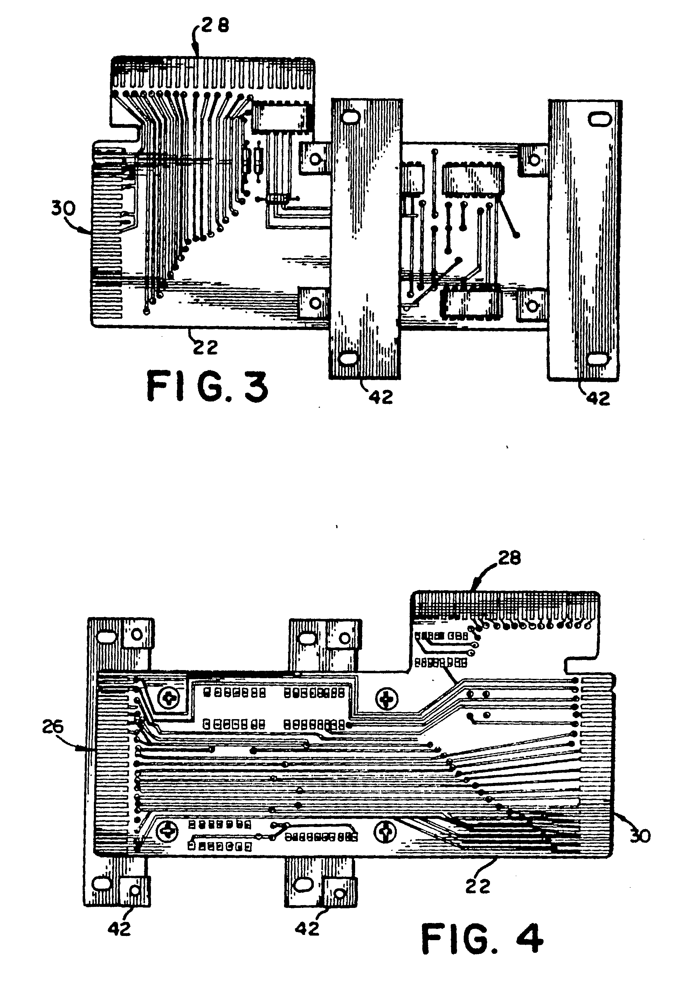

A presently preferred embodiment for circuit board 22 is shown in Figs. 3 and 4. The board or card 22 has, in addition to plug assemblies 26, 28 and 30, and the disk interface circuit shown in Fig. 2, two brackets 42 for remounting the original internal hard disk drive 14. Alternatively, a substitute internal hard disk drive, preferably of the 3.5 inch fixed disk type, may be installed on brackets 42.

The ease of installation may be appreciated by a more detailed explanation for enhancing the IBM PS/2 Model 50 computer. The original internal hard disk drive 14 comes mounted on a plastic snap-in rail assembly and plugs directly into the disk controller 12. Removal of the internal drive 14 may be accomplished by depressing two plastic latches and sliding the internal drive 14 away from the controller 12. When the internal drive 14 has been moved back a few inches, the drive may be lifted out. The rail assembly is removed from the internal drive 14 by removing four screws. The interface board 22 is then attached to the bottom of the internal drive by brackets 42 and the rail assembly is attached to the bottom of the interface card. One or more cables may be used to connect the internal drive 14 to the interface card 22.

The resulting assembly, with the interface board 22 sandwiched between the internal drive 14 and the rail assembly, mounts in the computer the same way as the original drive/rail assembly, except that the interface board 22 plugs directly into the controller 12 by means of plug assembly 26. Another cable may then be used to connect the interface circuit to an external hard disk drive, for example, those sold by CORE International, Inc. of Boca Raton, Florida. As would be expected, a SETUP program (in this case, IBM SETUP) must be run in order to add the external hard disk drive 32 to the configuration options.

Although the invention has been described in connection with a particular computer to simplify the explanation, those skilled in the art will appreciate that the invention is applicable in any instance wherein an internal drive, hard or soft (using diskettes), is connected directly to a disk controller rather than to a data bus.

Overall, the invention provides a method for modifying a computer, of the kind having an internal disk drive mounted on a bracket assembly and connected directly to a disk controller rather than to a data bus, comprising the steps of: disconnecting the internal disk drive from the disk controller; and, connecting a disk interface circuit directly to the disk controller in place of the internal disk drive, the disk interface circuit having a multiplexer for routing data and control signals between a first port connected to the disk controller and at least two branch ports adapted for connection to disk drives, whereby one of the internal disk drive and a substitute disk drive may be connected to one of the branch ports and an auxiliary disk drive may be connected to the other of the at least two branch ports, all without need for utilizing a conventional expansion slot. The method may further comprise the steps of: connecting the internal disk drive to one of the branch ports of the disk interface circuit; and, connecting an auxiliary disk drive to the other of the at least two branch ports of the disk interface circuit. The method preferably comprises the steps of: embodying the disk interface control circuit on a circuit board; mounting the internal disk drive directly on the circuit board; and, plugging the circuit board directly into the disk controller, the circuit board and the internal disk drive occupying substantially the same space formerly occupied by the internal disk drive alone. In many instances, the method may further comprise the step of mounting the circuit board on the bracket assembly originally used to mount the internal disk drive, the circuit board being disposed, in use, between the internal disk drive and the bracket assembly.

The invention also provides an apparatus for modifying a computer, of the kind having an internal disk drive mounted on a first bracket assembly and connected directly to a disk controller rather than to a data bus, the apparatus comprising: a disk interface circuit embodied on a circuit board, the disk interface circuit having a multiplexer for routing data and control signals between a first port connected to the disk controller and at least two branch ports adapted for connection to disk drives, and the circuit board having a plug adapted for direct connection to the disk controller in place of the internal disk drive; a second bracket assembly on the circuit card for mounting the internal disk drive; means for attaching the first bracket assembly to the circuit card for mounting the circuit card in the computer; means for connecting an internal disk mounted on the first bracket assembly to one of the branch ports of the disk interface circuit; and, means for connecting the other of the at least two branch ports of the disk interface circuit to an auxiliary disk drive, whereby one of the internal disk drive and a substitute disk drive may be connected to one of the branch ports and an auxiliary disk drive may be connected to the other of the at least two branch ports, all without need for utilizing a conventional expansion slot. The first and second bracket assemblies are preferably disposed, in use, on opposites sides of the circuit card, the apparatus occupying substantially the same space formerly occupied by the internal drive alone. Cable means are preferably provided for connecting the branch ports with respective disk drives.

The invention may be embodied in other specific forms without departing from the spirit or essential attributes thereof. Accordingly, reference should be made to the appended claims, rather than the foregoing specification, as indicating the scope of the invention.

## Claims

1. A method for modifying a computer, of the kind having an internal disk drive mounted on a bracket assembly and connected directly to a disk controller rather than to a data bus, comprising the steps of:

disconnecting the internal disk drive from the disk controller; and,

connecting a disk interface circuit directly to the disk controller in place of the internal disk drive, the disk interface circuit having a multiplexer for routing data and control signals between a first port connected to the disk controller and at least two branch ports adapted for connection to disk drives, whereby one of the internal disk drive and a substitute disk drive may be connected to one of the branch ports and an auxiliary disk drive may be connected to the other of the at least two branch ports, all without need for utilizing a conventional data bus expansion slot.

2. The method of claim 1, further comprising the step of connecting the internal disk drive to one of the branch ports of the disk interface circuit.

3. The method of claim 1, further comprising the step of connecting an auxiliary disk drive to one of the branch ports of the disk interface circuit.

4. The method of claim 2, further comprising the step of connecting an auxiliary disk drive to the other of the at least two branch ports of the disk interface circuit.

5. The method of claim 1, further comprising the steps of:
embodying the disk interface control circuit on a circuit board;
mounting the internal disk drive directly on the circuit board; and,
plugging the circuit board directly into the disk controller, the circuit board and the internal disk drive occupying substantially the same space formerly occupied by the internal disk drive alone.

6. The method of claim 5, further comprising the step of mounting the circuit board on the bracket assembly originally used to mount the internal disk drive.

7. The method of claim 6, further comprising the step of connecting an auxiliary disk drive to the other of the at least two branch ports of the disk interface circuit.

8. The method of claim 6, wherein the circuit board is disposed, in use, between the internal disk drive and the bracket assembly.

9. An apparatus for modifying a computer, of the kind having an internal disk drive mounted on a first bracket assembly and connected directly to a disk controller rather than to a data bus, comprising:
a disk interface circuit embodied on a circuit board, the disk interface circuit having a multiplexer for routing data and control signals between a first port connected to the disk controller and at least two branch ports adapted for connection to disk drives, and the circuit board having a plug adapted for direct connection to the disk controller in place of the internal disk drive;
a second bracket assembly on the circuit card for mounting an internal disk drive;
means for attaching the first bracket assembly to the circuit board for mounting the circuit board in the computer;
means for connecting an internal disk mounted on the first bracket assembly to one of the branch ports of the disk interface circuit; and,
means for connecting the other of the at least two branch ports of the disk interface circuit to an auxiliary disk drive,

whereby one of the internal disk drive and a substitute disk drive may be connected to one of the branch ports and an auxiliary disk drive may be connected to the other of the at least two branch ports, all without need for utilizing a conventional data bus expansion slot.

10. The apparatus of claim 9, wherein the first and second bracket assemblies are disposed, in use, on opposites sides of the circuit board, the apparatus occupying substantially the same space formerly occupied by the internal disk drive alone.

11. The apparatus of claim 9, comprising cable means for connecting the branch ports with respective disk drives.

FIG. 1

FIG. 2

EP 0 314 093 A2

FIG. 3

FIG. 4